# EUROPEAN PATENT APPLICATION

(11) **EP 2 463 072 A1**
(43) Date of publication of application: **13.06.2012**
(21) Application number: 10380148.6
(22) Date of filing: 10.12.2010
(51) Int. Cl.: B29B 17/00

(54) **Composite for manufacturing structural elements based on thermoplastic polymers from recycled materials**

(71) Applicant: SP Kloner Ecotec S.L., 46960 Aldaia Valencia (ES)
(72) Inventor: Campos Beceiro, Alberto, 46960 Aldaia (Valencia) (ES)
(74) Representative: Ungria Lopez, Javier

(57) **Abstract**

The present invention relates to a new composite for manufacturing structural elements characterized in that it comprises at least two thermoplastic polymers from recycled materials and at least one filler selected from mineral fillers and reinforcing fibres, or any combination thereof.

A second object of this invention will be, likewise, a structural element characterized in that it comprises said composite, as well as the method for manufacturing the same.

## Description

### Field of the invention

The present invention belongs to the field of composites and, more particularly, to the development of composites especially suitable for manufacturing pallets and other structural elements or great structural stiffness articles.

### State of the art prior to the invention

Currently, there is a wide range of pallets for use in cargo storage and transport in the market. Traditionally, the manufacturing of pallets has been carried out from wood. However, although offering certain advantages, this material presents the disadvantage of not being authorized for food products transport and storage, as well as transport intended for export, without previously undergoing a disinfection method.

Due to these disadvantages, the development of new materials has been favoured in recent years, among them being worthy of mention plastics. Among the most utilized plastic materials there is polypropylene (PP), although mixtures of polyethylene terephthalate (PET) with high density polyethylene (PE) are also frequent. These polymers offer the possibility of being recycled, being able to come from different sources such as, for example, batteries casings or motor vehicles bumpers.

With the purpose of achieving enough stiffness in the final products, the aforementioned polymers are usually reinforced with significant percentages of powdered mineral additives such as, for example, calcium carbonate or talc. These formulations achieve elastic modulus of the order of 1 to 1.5 GPa, obtaining pallets suitable only for supporting light loads stored in shelves with support at both ends since, in the case of being larger weight loads, the great deflections to which the pallets would be subjected could endanger their stability.

Therefore, although new materials capable of increasing the stiffness of plastic materials have been developed by employing, among others, polymers with greater stiffness such as, for example, PET, these materials generally suffer from, however, great impact brittle.

Thus, an object of this invention is to present a new composite especially suitable for its use in pallets and other structural elements or great structural stiffness articles. This new composite presents major advantages against other similar materials from the state of the art among which are worthy of mention, for example, its reduced cost, as well as its high stiffness and impact resistance, which allows developing pallets and other articles capable of supporting shelving loads of up to 2000 kg/m², complying with what is established in regulation ISO 8611.

### Description of the invention

The present invention is thus related to a new composite for manufacturing structural elements characterized by comprising at least two thermoplastic polymers from recycled materials and at least one filler selected from mineral fillers and reinforcing fibres, or any combination thereof.

In a preferred manner, the thermoplastic polymers will be selected from high density polyethylene and low density polyethylene, as well as any combination thereof.

Preferably, the low density polyethylene in the composite will be comprised between 30 and 70%, and more preferably, between 50 and 60% of the total weight, and will come from, in a preferred manner, urban waste, more preferably, TetraPak containers.

On the other hand, the high density polyethylene will be comprised in the composite, preferably, between 10 and 50% and, more preferably, between 15 and 30% of its total weight. In this case, the high density polyethylene will come from, in a preferred manner, recycled waste such as, for example, urban waste from bottles and caps.

Percentages with respect to the previously noted thermoplastic polymers correspond to the suitable synergistic ratio so that, once said polymers are combined, they crystallize in the form of interpenetratable lattices, thereby maximizing the stiffness of the obtained final mixture. In this way, achieving composites with the suitable resistance and stiffness is possible, once the fillers also present in their formulation are added.

Within these fillers, mineral fillers will consist, in a preferred manner, of fillers selected from those usually used in plastics processing. In this way, said fillers will be, preferably, selected from a group consisting of, at least, calcium carbonate, talc, clays and metal particles, preferably, aluminium, as well as any combination of the above. In a more preferred manner, said fillers will be selected from a group consisting of wood sawdust waste and mineral nature waste and finely divided thermostable polymers waste, as well as any combination of the above. In the previous group combustion ashes or sanding dust from thermostable composites such as epoxy resins or polyester, for example, are worth of mention.

On the other hand, reinforcing fibres are selected, preferably, from a group consisting of glass, carbon, aramid, boron and basalt fibres, or any combination of the above. Additionally, any known fibre having an elastic modulus higher than 40 GPa could also be used. In a preferred manner, these fibres will come from composites materials production or recycling or from post consumer products waste.

The percentage of the fillers added to the final material will be comprised, preferably, between 10 and 50% and, more preferably, between 20 and 40% of the total weight.

Likewise, in a preferred embodiment of the invention, said composite could likewise comprise other polymers, preferably, adhesion polymers or compatibilizing agents capable of improving, at the suitable ratio, the adhesion between the thermoplastic polymers and the fillers. In a preferred manner, said adhesion polymer will be selected from widely known and commercially available adhesion polymers. Preferably, said adhesion polymer will be selected from a group consisting of polyethylene and polypropylene polymers containing graft polar groups; ethylene and acrylic or methacrylic acid copolymers; ethylene and acrylates or acetates copolymers; glycidyl methacrylate derivatives and styrene-ethylene-butadiene-styrene (SEBS) copolymers containing graft polar groups, as well as any combination of the above. With respect to the graft polar groups, said groups will consist, in a more preferred manner, of acrylic acid or maleic anhydride.

In a preferred embodiment of the invention, the low density thermoplastic polymers will come from, preferably, waste from TetraPak containers or the like, made up of 75% cardboard, 20% low density polyethylene and 5% aluminium, such that, once the cardboard has been extracted, achieving a mixture of, approximately, 80% low density polyethylene and 20% aluminium is possible. Particularly, low density polyethylene agricultural films could also be used. In this case, the mineral fillers will consist, preferably, of calcium carbonate or talc; combustion ashes from industrial processes or energy production from solid fuels; as well as sanding dust from industrial processes such as epoxy resins or polyester composites manufacturing, among other possibilities.

With respect to high density polyethylene, it will come from, preferably, post consumer waste from blow moulded bottles.

In a specially preferred embodiment of the invention, the composite will be characterized in that it comprises 48% low density polyethylene, 29% high density polyethylene, 20% fibre glass and 3% adhesion polymer.

Likewise a second object of this invention will be a pallet characterized in that it comprises in its formulation the new composite previously described. Additionally, it will be an object of protection any other structural element or article characterized in that it presents great structural stiffness, preferably selected from, but not limited to, a group consisting of furniture structural frames, barriers, street furniture elements such as, for example, benches, brick fences and street fences, clothes hangers, underwear driers, dust collectors, handles for domestic tools and road signs elements, among other possibilities.

Likewise, an additional object of the invention will be the method for manufacturing the previously described composites, which method is characterized in that it comprises the following steps:
a) a first hot kneading step of the components of the composite, giving rise to a first mixture mass;
b) the sequenced injection of said first mixture mass in a mold, directing the reinforcing fibres in perpendicular direction to the greatest bearing pressure in the final product.

In this way, it is possible to obtain composites suitable for manufacturing pallets or other great structural stiffness articles characterized in that they present elastic modulus higher than 3 GPa, which means more than two times the stiffness of the pallets commercially available.

### Pre-treatment step

In a preferred embodiment of the invention, the previous method will comprise in turn an initial step for pre-treatment of the raw materials, prior to the kneading step. This pre-treatment step could comprise, in turn, shredding and cleaning the thermoplastic polymers.

In a preferred manner, the shredding of the thermoplastic polymers will be carried out by the use of mills suitable for this type of materials. Likewise, the cleaning will be carried out, preferably, by the already known cleaning and drying technologies or dry cleaning with air streams.

In turn, in the case that the reinforcing fibres are in the form of cuttings, this pre-treatment step will comprise the cutting thereof until reaching, preferably, a measure from 10mm to 20mm, so that they can be subsequently fed, by continuous dosage, to the extruder. Conversely, in the case that they come from resinated composites, the pre-treatment will comprise the milling of said composites until they are defibrillated, the resin being powdered and the fibres with a size ranging, preferably, between 1 mm and 10 mm. Nevertheless, in a preferred manner, the composite will be used jointly, without the need of carrying out a previous separation step of its two components.

### Kneading step

The kneading step is carried out, preferably, by molten state kneading by means of commercially known equipments provided with twin-screw extruders, co-rotating or not, nevertheless not being limited to said possibility. Among these equipments is worth noting, for example, the continuous kneaders such as the CIM of Japan Steel Works, Ltd. or the FCM of Farrell Corp. Other possible equipments suitable for carrying out this step are, for example, the twin-screw extrusion equipments such as the ZSK of Coperion Werner Pfleiderer GMBH & Co. and the TEX of Japan Steel Works Ltd.

In an additional preferred embodiment, equipments comprising a single screw extruder following an intensive mix or kneading equipment carrying out the kneading and extrusion operations could likewise be used. This equipment will comprise, preferably, co-rotating screws, preferably, with intermediate gas extraction by vacuum pump.

In a particular embodiment characterised in that TetraPak waste or the like are used, the extrusion will be made at temperatures below 190°C with the purpose of avoiding gases generation by the breakdown of cellulose present among the polymers waste or in the reinforcing filler which may affect the structure of the final compound.

### Injection step

The resulting mass from the kneading step can be cool down and cut in pellets for afterwards feeding a standard injection machine or, preferably, it can be introduced in molten state directly in the ram of the injection machine.

It is important that both the hot plate and the mold are prepared for carrying out a sequential injection such that it allows directing the reinforcing fibres in a perpendicular direction to the bearing pressure of the final product.

In the same way as in the previous step, in a particular embodiment characterised in that TetraPak waste or the like are used, it is important not to generate in any point of the injection temperatures higher than 190°C which break down the cellulose present among the polymers waste, giving rise to gas that can modify the structure of the final product. In this way, both the doors and the injection channels will have, preferably, internal diameters wide enough for avoiding generating rises in temperature above 190°C due to the friction.

Next, a series of examples with no limitative character, are presented by way of illustration with the object of reaching to a better understanding of the invention.

### Example 1

In this first example, the composite object of the invention was prepared from a waste with 55% TetraPak (80% PE and 20% aluminium); 23% high density PE; 19% fibre glass and 3% of a compatibilizing agent (Licocene® PMA) from Clariant International Ltd 4351, the stated percentages being in percentage by weight with respect to the total. Once the mixture of the previous components has been kneaded, it was injected giving rise to half pallet, with 80x60 cm dimensions.

Next, the stiffness and impact resistance of said pallet was determined according to the ISO 8611 regulation, obtaining the following results:
- Test 1.- Flexural strength in stationary plate compressometer: 1000 kg
- Test 7.- Shelving maximum deflection with a load of 500 kg at 23°C: 7 mm
- Test 7 at 40°C: 8 mm
- Test 8.- Flexural strength of the skids: 1800 Kg
- Test 13.- Impact resistance: breaking acceleration 5g

### Example 2

In this second example, the composite object of the invention was prepared from a waste with 50% TetraPak (80% PE and 20% aluminium); 18% high density PE; 29% fibre glass and 3% of a compatibilizing agent (Licocene® PMA) from Clariant International Ltd 4351, the stated percentages being in percentage by weight with respect to the total. Once the mixture of the previous components has been kneaded, it was injected giving rise to half pallet, with 80x60 cm dimensions.

Once the material was obtained, its stiffness and impact resistance was determined according to the ISO 8611 regulation, obtaining the following results:
- Test 1.- Flexural strength in stationary plate compressometer: 1200 kg
- Test 7.- Shelving maximum deflection with a 500 kg load at 23°C: 4 mm
- Test 7 at 40°C: 6 mm
- Test 8.- Flexural strength of the skids: 2000 Kg
- Test 13.- Impact resistance: breaking acceleration 4g

The results obtained both in example 1 and example 2 show the great structural stiffness of the products obtained from the composite object of the invention since it is equivalent to, approximately, two times the stiffness and maximum load and one and a half times the impact resistance with respect to the commercially available products generally manufactured based on polypropylene or high density polyethylene with calcium carbonate fillers.

## Claims

1. Composite for manufacturing structural elements **characterized in that** it comprises at least two thermoplastic polymers from recycled materials and at least one filler selected from mineral fillers and reinforcing fibres, or any combination thereof.

2. Composite, according to claim 1, **characterised in that** the thermoplastic polymers consist of high density polyethylene and low density polyethylene.

3. Composite, according to claim 2, **characterised in that** the high density polyethylene is comprised between 10 and 50% of the total weight and the low density polyethylene between 30 and 70% with respect to the total weight of the composite.

4. Composite, according to claim 2 or 3, **characterised in that** the low density polyethylene is from waste from TetraPak containers.

5. Composite, according to claim 2 or 3, **characterised in that** the high density polyethylene is from urban waste of bottles and caps.

6. Composite, according to any one of the previous claims, **characterised in that** the mineral fillers are selected from a group consisting of, at least, calcium carbonate, talc, clays and metal particles, as well as any combination of the above.

7. Composite, according to any one of claims 1 to 5, **characterised in that** the mineral fillers are selected from a group consisting of wood sawdust waste, mineral nature waste and thermostable polymers waste, as well as any combination of the above.

8. Composite, according to any one of the previous claims, **characterised in that** the reinforcing fibres are selected from a group consisting of glass, carbon, boron, aramid and basalt fibres, as well as any combination of the above.

9. Composite, according to claim 8, **characterised in that** said reinforcing fibres are from industrial waste from composites materials manufacturing or recycling.

10. Composite, according to any one of the previous claims, **characterised in that** the percentage of the fillers is comprised between 10 and 50% of the total weight of the composite.

11. Composite, according to any one of the previous claims, **characterized in that** it further comprises at least one adhesive polymer.

12. Structural element **characterized in that** it comprises a composite according to any one of the previous claims.

13. Structural element, according to claim 12, **characterised in that** said structural element is selected from a group consisting of pallets, furniture structural frames, barriers, street furniture elements, brick fences and street fences, clothes hangers, underwear driers, dust collectors, handles for domestic tools and road signs elements.

14. Method for manufacturing a composite according to any one of claims 1 to 11, **characterized in that** it comprises the following steps:
a) a first hot kneading step of the components of the composite, obtaining a first mixture mass;
b) the sequenced injection of said first mixture mass in a mold, directing the reinforcing fibres in perpendicular direction to the greatest bearing pressure of the final product.

15. Method, according to claim 14, **characterized in that** it comprises one additional step, prior to step (a), of pre-treatment of the components of the composite.

16. Method, according to claim 15, **characterised in that** the pre-treatment comprises shredding and cleaning the thermoplastic polymers.

17. Method, according to any one of claims 14 to 16 **characterised in that**, when the components of the composite comprise cellulose in its composition, said method is carried out at temperatures below 190°C.

18. Use of a composite, according to any one of claims 1 to 11 for manufacturing a structural element.

19. Use of a composite for manufacturing a structural element, according to claim 18, **characterised in that** said structural element is a pallet.
